# EUROPEAN PATENT APPLICATION

(11) **EP 2 793 449 A1**
(43) Date of publication of application: **22.10.2014**
(21) Application number: 13163773.8
(22) Date of filing: 15.04.2013
(51) Int. Cl.: H04M 1/60, H04M 1/725

(54) **Synchronizing a wireless communications device to an interface unit in a personal communications system**

(71) Applicant: GN Netcom A/S, 2750 Ballerup (DK)
(72) Inventor: Goldman, Tomasz Jerzy, DK-2900 Hellerup (DK)
(74) Representative: Zacco Denmark A/S

(57) **Abstract**

A wireless communications device (2) is synchronized to an interface unit (3) in a personal communications system, each comprising a transceiver (23, 33) configured to transmit radio signals between them according to a wireless communication protocol. Synchronization information is transmitted from the interface unit (3) to the wireless communications device (2) via a wired connection established between them by connection means (28, 38) of the wireless communications device (2) and an adaptor (24) in the interface unit (3) in which the wireless communications device (2) can be placed when it is not active. In this way the transceiver of the wireless communications device can be kept in synchronization with the interface unit without occupying a channel of the wireless communication protocol. Channels not occupied by idle devices can instead be made available for active devices such that the capacity of the installation may be increased considerably.

## Description

### Technical Field

The invention relates to synchronizing a wireless communications device to an interface unit in a personal communications system, wherein the wireless communications device and the interface unit comprise transceivers configured to transmit radio signals between them according to a wireless communication protocol.

### Background

Today standard telephones are rapidly being replaced by personal communications systems, such as wireless headset systems comprising a headset and a base station. A wireless headset typically communicates with its base station by the transmission of radio signals between the headset and the base station. The base station may be connected to e.g. a telephone line or a computer having an audio communication program such as Microsoft Lync® or Skype® installed. The wireless communication between the headset and the base station of a headset system uses a wireless communication protocol, such as Digital Enhanced Cordless Telecommunications (DECT), which at present seems to be the most widely used wireless communication protocol for this application.

In e.g. office environments and call centres, i.e. so-called high density installations, a large number of headset systems, each one comprising a headset and a base station, will typically be used within a limited geographical area. This is possible because the wireless communication protocol has a certain bandwidth allowing a given number of channels to be used simultaneously. In Europe the DECT frequency band is 1880 MHz - 1900 MHz, which allows the use of 10 carriers with 12 time slots to be used in each direction, i.e. up and down stream. Thus up to 120 channels can be provided in the European DECT spectrum, which means that up to 120 headset systems can be used simultaneously in the same area. In the US and Canada the DECT frequency band is 1920 MHz - 1930 MHz, which allows the use of 5 carriers and provides up to 60 channels.

Further, the increased use of wide band speech in e.g. Microsoft Office Communicator reduces the number of available channels further, since a higher bandwidth is needed for each channel. Thus in Europe the number of available DECT wideband channels is only 60, while in the US and Canada it is reduced to 30.

When a DECT headset system is active, i.e. a wireless connection has been established between the headset and the base station, information used for synchronizing the headset and the base station to each other is transmitted from the base station to the headset in the time slot assigned for downstream transmission of this connection.

However, even when a headset is idle, i.e. when no call is taking place, such synchronization information is still transmitted from the base station to the headset in order to enable the headset to still be synchronized with the base station, so that the connection can be re-established without delay when a new call arrives or is requested from the headset. This synchronization information is transmitted in the form of a so-called dummy bearer, which still occupies a part of a DECT channel timing wise.

This means that as long as a headset system is switched on, one of the 120 channels is reserved for this headset system, independently of whether the headset system is active in a call or not. In an office environment most headset systems will normally be switched on and thus occupy a DECT channel at least during the office hours. Naturally, this reduces the capacity of DECT headset systems, especially when call utilization is low, which is actually the case in many office environments. Thus a considerable part of the 120 available DECT channels (60 channels in the US and Canada) will typically be occupied by idle headset systems.

GB 2 477 420 shows a cordless telephone having a base station and a mobile part using transmission of frame-based transmission of voice data between the base station and the mobile part in accordance with the DECT Standard. The dummy bearer, and thus the synchronization information, is transmitted in only some of the frames, which reduces the transmission power and thus also power consumption. Although the dummy bearer is only transmitted in some of the frames, it still occupies a DECT channel also when the cordless telephone is idle.

### Summary

Therefore, it is an object of embodiments of the invention to provide a method of synchronizing a wireless communications device to an interface unit in a personal communications system, which can increase the capacity of the personal communications system in high density installations, especially when call utilization is low.

According to embodiments of the invention the object is achieved in method of synchronizing a wireless communications device to an interface unit in a personal communications system, wherein each of said wireless communications device and interface unit comprises a transceiver configured to transmit radio signals between said wireless communications device and said interface unit according to a wireless communication protocol. The object is achieved when the method comprises the step of transmitting synchronization information from the interface unit to the wireless communications device via a wired connection established between the interface unit and the wireless communications device by connection means of the wireless communications device and an adaptor arranged in the interface unit in which the wireless communications device can be placed when the personal communications system is not active in a call.

When the synchronization information is transmitted from the interface unit to the wireless communications device via a wired connection when the wireless communications device is placed in the interface unit during idle periods, the transceiver of the wireless communications device can be kept in synchronization with the transceiver of the interface unit without occupying a channel of the wireless communication protocol of the personal communications system. When channels of the wireless communication protocol are no longer occupied by idle devices, these channels can instead be made available for other active devices of the same installation with the result that the capacity of the installation may be increased considerably.

In one embodiment, the personal communications system is a headset system comprising a headset and a base station. Headset systems are often used in high density installations, e.g. in office environments, where improvement of the capacity of the installation can be important.

According to an other embodiment, the personal communications system is a handset system comprising a handset and a base station.

The wireless communication protocol may be a Digital Enhanced Cordless Telecommunications protocol (DECT), which at present seems to be the most widely used wireless communication protocol for this application.

When the method further comprises the step of transmitting information regarding available channels in said Digital Enhanced Cordless Telecommunications protocol from the interface unit to the wireless communications device via said wired connection, the process of re-establishing a wireless connection between the interface unit and the wireless communications device when a new call arrives or is requested from the wireless communications device is further facilitated.

In one embodiment, the method comprises transmitting information from the interface unit to the wireless communications device via the wired connection by means of a serial interface in each of the interface unit and the wireless communications device.

In some embodiments, the invention also relates to a personal communications system comprising a wireless communications device and an interface unit, wherein each of said wireless communications device and interface unit comprises a transceiver configured to transmit radio signals between said wireless communications device and said interface unit according to a wireless communication protocol. The interface unit has an adaptor in which the wireless communications device can be placed when the personal communications system is not active in a call, each of the adaptor and the wireless communications device comprising connection means configured to establish a wired connection for transmission of electrical signals between the interface unit and the wireless communications device; and the interface unit is configured to send synchronization information to the wireless communications device via said wired connection.

### Brief Description of the Drawings

Embodiments of the invention will now be described more fully below with reference to the drawings, in which
Figure 1 shows a headset system with a headset and a base station in an active state where a wireless connection is established between the headset and the base station;
Figure 2 shows the headset system of Figure 1 in a passive state, where the headset is placed in the base station;
Figure 3 shows an office environment or a call centre with a large number of headset systems;
Figure 4 shows the time spectrum of a DECT system;
Figure 5 shows the frequency/time spectrum of a DECT system;
Figure 6 shows a block diagram of a base station in a headset system;
Figure 7 shows a block diagram of a headset in a headset system; and
Figure 8 illustrates a situation where a headset is idle and placed in an adaptor of a base station.

### Detailed Description

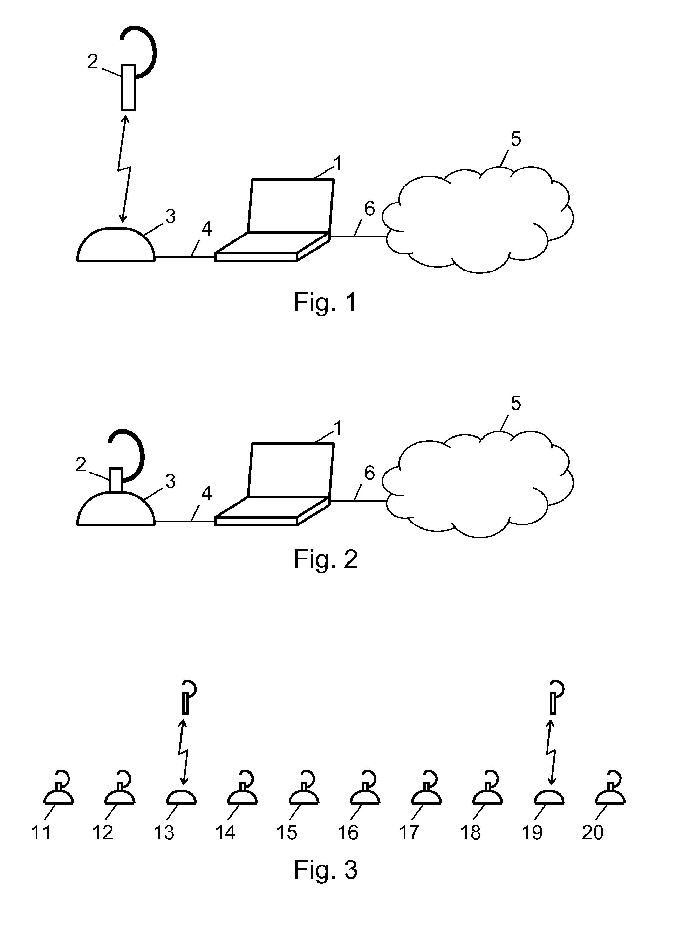

Figure 1 illustrates an example of a personal communications system or headset system 2, 3 in which the invention may be used. The headset system 2, 3 is connected to a client computer 1 via a connection 4, which may be connected to the client computer 1 by means of e.g. a USB interface. The headset system 2, 3 comprises a headset 2 and a base station, base unit or interface unit 3. In Figure 1, the headset system is shown in an active state in which the headset 2 has been moved away from the base station 3, and a wireless connection has been established between the headset 2 and the base station 3 by transmitting radio signals between them. In a passive state, which is illustrated in Figure 2, the headset 2 may be placed in the base station 3, e.g. in an adaptor of the base station 3. The radio signals transmitted between the headset 2 and the base station 3 in the active state may represent sound (speech), data or control signals. The wireless communication between the headset 2 and the base station 3 may use a wireless communication protocol, such as Digital Enhanced Cordless Telecommunications (DECT).

The client computer 1 may be a notebook computer, a desktop computer, a personal digital assistant (PDA) device, a smartphone or other computer types. The client computer 1 may also be connected to a network 5 via the connection 6. The network 5 may e.g. be the Internet or another communications network.

Among several other applications running on the client computer 1 could be a soft phone application. This application uses the headset system 2, 3 to perform telephone communications via the network 5. The client computer 1, and thus the soft phone application, communicates with the headset system 2, 3 via a USB interface and the connection 4 to the base station 3 and with the network 5 via a network interface and the connection 6. However, other types of interfaces may be used as well. As an example, wireless interfaces could be used for communication with the headset system 2, 3 and/or the network 5. The soft phone application is often used in relation to Unified Communications (UC), which is an integration of real time communication services such as instant messaging, presence information, telephony, video, data sharing, etc.

Alternatively, the headset system 2, 3 may be connected to a standard telephone or another type of telecommunications device.

Figure 3 illustrates an office environment or a call centre, i.e. a so-called high density installation, where a large number of headset systems, each one comprising a headset and a base station, will typically be used within a limited geographical area. This is possible because DECT (as well as other wireless communication protocols) has a certain bandwidth allowing a given number of channels to be used simultaneously. In Europe the DECT frequency band is 1880 MHz - 1900 MHz, which allows the use of 10 carriers with 12 time slots to be used in each direction, i.e. up and down stream. Thus up to 120 channels can be provided in the European DECT spectrum, which means that up to 120 headset systems can be used simultaneously in the same area. In the US and Canada the DECT frequency band is 1920 MHz - 1930 MHz, which allows the use of 5 carriers and provides up to 60 channels.

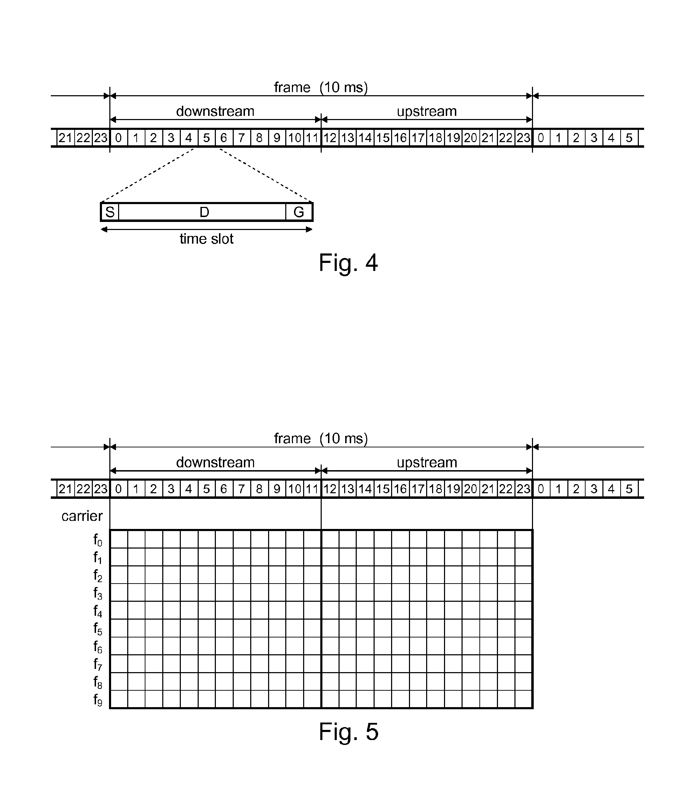

Figure 4 illustrates the time spectrum in a DECT system, which is divided into consecutive frames, each having a length of 10 ms. Each frame is subdivided into 24 time slots that in Figure 4 are numbered from time slot 0 to time slot 23. Each frame is split in two halves, so that the first 12 time slots, i.e. time slots 0 to 11, of each frame are used for data transmission in the downstream direction, i.e. from the base station 3 to the headset 2, while the next 12 time slots, i.e. time slots 12 to 23, are used for upstream transmission, i.e. from the headset 2 to the base station 3. Figure 4 also illustrates the configuration of each time slot, in the figure exemplified by time slot 5. A first field S of the time slot is used as a synchronization field for transmission of synchronization data between the base station to the headset, or vice versa for the upstream time slots. A second field D of the time slot is used for transmission of payload data, e.g. voice data. Finally, a field G of the time slot is used as a guard section.

Figure 5 illustrates the DECT frequency/time spectrum. As mentioned above, the basic European DECT frequency allocation uses ten carrier frequencies in the 1880 MHz - 1900 MHz frequency band. In Figure 5, the ten frequencies are illustrated by ten rows labelled f₀ to f₉, while the 24 time slots are illustrated by corresponding columns. As in Figure 4, the first 12 columns numbered 0 to 11 are the time slots used for downstream transmission, while the 12 columns numbered 12 to 23 are the time slots used for upstream transmission. This provides for up to 120 channels in each direction, i.e. up and down stream, in the European DECT spectrum, where each channel is indicated by a square in Figure 5.

In Figure 3 ten headset systems 11, 12, 13, 14, 15, 16, 17, 18, 19 and 20 are shown for illustrational purposes, of which the two headset systems 13 and 19 are used for communication. Thus in this case two of the available channels are occupied. However, as it will be described below, also the passive headset systems may occupy a channel.

When a DECT headset system is in the active state, where a wireless connection has been established between the headset 2 and the base station 3, as it was illustrated with the headset systems 13 and 19 in Figure 3, the S field of the time slot assigned for downstream transmission of this connection is used for transmitting from the base station e.g. information about the identity of the base station and information used for synchronizing the base station 3 and the headset 2 to each other, i.e. time slot timing.

However, even when a headset is idle, i.e. when no call is taking place, such synchronization information is still transmitted from the base station 3 to the headset 2 in order to enable the headset to still be synchronized with the base station, so that the connection can be re-established without delay when a new call arrives or is requested from the headset. This synchronization information is transmitted in the form of a so-called dummy bearer, where the synchronization information is typically transmitted in the S field, while the D field of the dummy bearer may be empty or used for other control information. Although the dummy bearer may only use the S field of the time slot, the channel, i.e. one of the 120 channels illustrated in Figure 5, is occupied by the idle headset system. This means that as long as a headset system is switched on, one of the 120 channels is reserved for this headset system, independently of whether the headset system is active in a call or not. Even if only the base station is switched on, it will normally transmit a dummy bearer in order for a headset or another mobile DECT unit searching for a base station to find and lock on to the base station. In an office environment most headset systems will normally be switched on and thus occupy a DECT channel at least during the office hours. Naturally, this reduces the density/scalability of DECT headset systems when call utilization is low. Actually, the call utilization may be quite low in many office environments. A utilization of 40% is normally considered as high, and thus a considerable part of the 120 available DECT channels (60 channels in the US and Canada) will typically be occupied by idle headset systems.

This problem is more pronounced for enterprise DECT where all base stations are synchronized to each other, but is also present in unsynchronized residential DECT systems like DECT headsets,

Below, an embodiment of a headset system that can reduce or eliminate this problem is described.

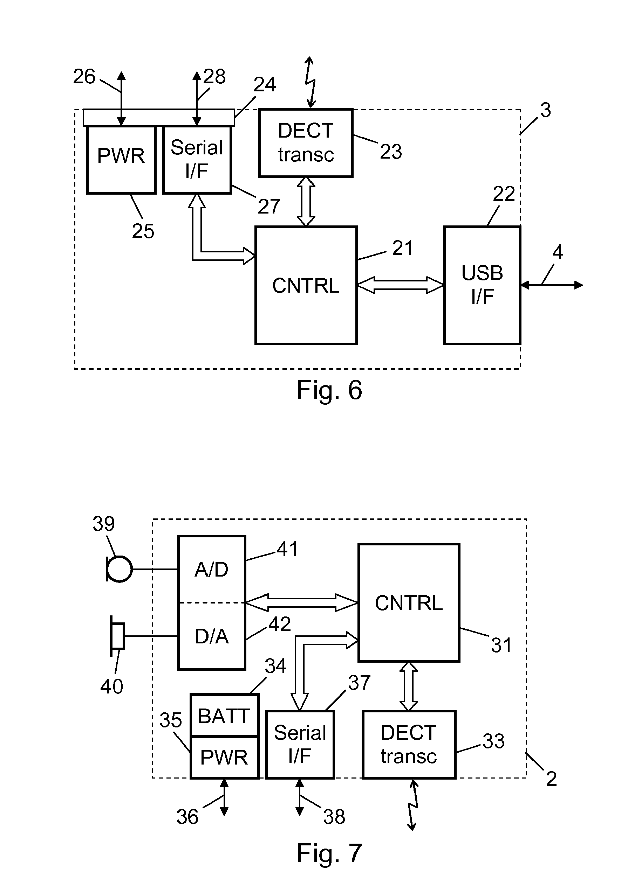

Figure 6 shows a block diagram of an embodiment of the base station 3, which comprises a control unit 21 controlling the functions of the base station. The control unit 21 communicates with the client computer 1 via the USB interface 22 and the connection 4. Alternatively, the control unit 21 may be connected to another type of telecommunications device either via the USB interface 22 or an analog interface depending on the type of telecommunications device. Further, the control unit 21 is connected to a DECT transceiver 23 for wireless communications with the headset 2. When the headset 2 is idle, i.e. no call involving the headset system is taking place, the headset 2 may be placed in an adaptor or connector 24 on the base station 3. Connected to this adaptor 24 is a power supply circuit 25, which via the connector pin or socket 26 in the adaptor 24 can supply charging current for a battery in the headset 2 when it is placed in the adaptor. Also a serial interface 27 is connected to a connector pin or socket 28 (connection means) of the adaptor 24. Thus when the headset 2 is placed in the adaptor 24 a wired connection for transmission of serial data between the headset 2 and the base station 3 can be established in addition to the one for supplying charging current to the battery of the headset. This serial data connection can be used for e.g. firmware update of the headset 2 and performing a pairing process. As described in further detail below. It can also be used for transmitting synchronization information from the base station 3 to the headset 2 that would otherwise have been transmitted in a dummy bearer via the wireless DECT connection. It is noted that the pins or sockets 26 and 28 may also be combined to one single pin or socket that is suitable for the supply of charging current as well as the transmission of serial data between the headset 2 and the base station 3.

Similarly, Figure 7 shows a block diagram of an embodiment of the headset 2, which comprises a control unit 31 controlling the functions of the headset. The control unit 31 is connected to a DECT transceiver 33 for wireless communications with the base station 3. A battery 34 is connected to a power supply circuit 35 for charging the battery, and the power supply circuit 35 is further connected to a connector socket or pin 36 for connection to the corresponding connector pin or socket 26 in the base station 3 when the headset is placed in the adaptor 24 of the base station 3. Also a serial interface 37 is connected to a connector socket or pin 38 for connection to the corresponding connector pin or socket 28 in the base station 3. Also here the sockets or pins 36 and 38 may be combined to one single socket or pin that is suitable for the supply of charging current as well as the transmission of serial data between the headset 2 and the base station 3. The headset 2 includes a microphone 39 and a loudspeaker 40. The microphone 39 is connected to an A/D-converter 41 that converts an analog voice signal received by the microphone 39 to digital signals that can be processed by the control unit 31, and similarly the loudspeaker 40 is connected to a D/A-converter 42 that converts digital signals from the control unit 31 to analog signals that can be reproduced by the loudspeaker 40. The control unit 31 also performs different tasks such as encoding/decoding (codec), noise reduction and echo control.

When the headset system comprising the headset 2 and the base station 3 is active, i.e. a call is taking place, a wireless connection is established between the DECT transceiver 23 in the base station 3 and the DECT transceiver 33 in the headset 2. This connection uses one channel, i.e. one time slot in each direction for one carrier frequency, of the 120 channels that were illustrated in Figure 5. In both directions the D field of the time slot is used for transmission of payload data, such as voice data relating to the call. The S field of the time slot assigned for downstream transmission is used for transmitting information from the base station 3, e.g. about the identity of the base station and information used for synchronizing the base station 3 and the headset 2 to each other, i.e. time slot timing.

In a situation where the headset 2 is idle (i.e. no call is taking place), but not placed in the adaptor 24 of the base station 3 the synchronization information is still transmitted via the wireless connection from the DECT transceiver 23 in the base station 3 to the DECT transceiver 33 in the headset 2 in order to enable the headset 2 (i.e. the DECT transceiver 33) to still be synchronized with the base station 3, so that the connection can be re-established without delay when a new call arrives or is requested from the headset 2. As mentioned above, this synchronization information is transmitted in the form of a so-called dummy bearer, where the synchronization information is typically transmitted in the S field, while the D field of the dummy bearer may be empty or used for other control information. Thus the used channel, i.e. one of the 120 channels illustrated in Figure 5, is occupied by the idle headset system.

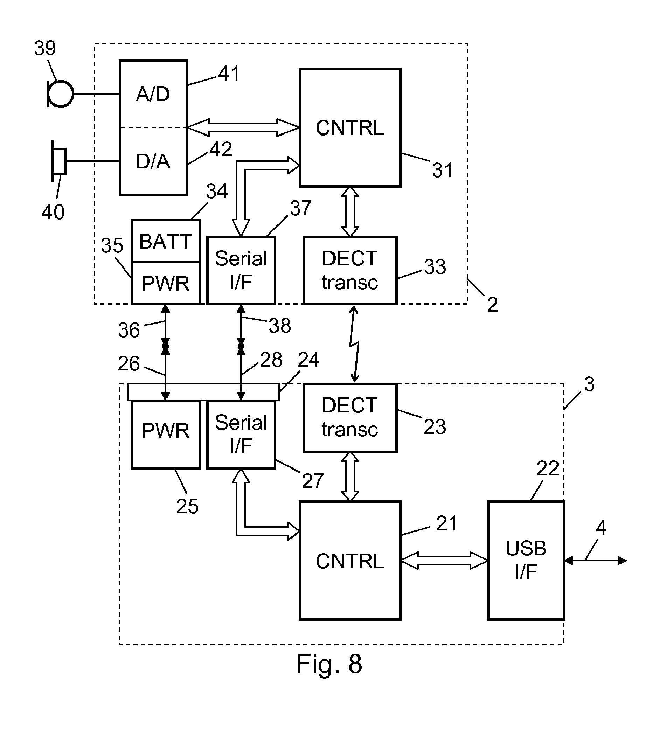

However, when the headset 2 is idle and placed in the adaptor 24 of the base station 3 the situation is now different. This situation is illustrated in Figure 8. The connector socket or pin 38 of the headset 2 is now connected to the corresponding pin or socket 28 of the base station 3 so that a wired connection is established between the serial interface 37 of the headset 2 and the serial interface 27 of the base station 3. This means that although a wireless connection could still exist between the two DECT transceivers 23 and 33 as shown in Figure 8, this connection is no longer needed, because the control unit 21 can now send the synchronization information needed to keep the DECT transceiver 33 in the headset 2 synchronized with the DECT transceiver 23 in the base station 3 through the wired connection defined by the serial interfaces 27 and 37 and the connection pin/socket 28, 38. Thus the wireless connection between the two DECT transceivers 23 and 33 can now be disconnected and the DECT channel that was previously used for transmitting the dummy bearer can be released for use by other DECT systems in the office environment. This considerably increases the capacity of communication systems with a large number of headset systems, especially in office environments where the call utilization is low. The DECT transceiver 23 in the base station 3 can still listen to DECT radio frequency signals emitted by other DECT systems in the environment so that the control unit 21 can detect which DECT channels are occupied by other systems, and thus it can also send information via the serial link 24, 28, 38 and 37 to the headset regarding available channels in addition to the synchronization information. This allows the control unit 31 in the headset 2 to maintain a prioritized list of available DECT channels, which further reduces the delay of re-establishing a DECT connection between the two DECT transceivers 23 and 33 when a new call arrives or is requested by the headset 2.

Although various embodiments of the present invention have been described and shown, the invention is not restricted thereto, but may also be embodied in other ways within the scope of the subject-matter defined in the following claims.

Thus, the invention also relates to handset systems comprising a handset and a base station.

Occasionally, two headset or handset systems in vicinity of each other, may occupy the same channel, and if they are undocked simultaneously, one of them must change channel, which may cause a small delay. However, the more often the base station listens for occupied channels, the less the problem is.

## Claims

1. A method of synchronizing a wireless communications device (2) to an interface unit (3) in a personal communications system, wherein each of said wireless communications device (2) and interface unit (3) comprises a transceiver (23, 33) configured to transmit radio signals between said wireless communications device (2) and said interface unit (3) according to a wireless communication protocol,
**characterized in that** the method comprises the step of transmitting synchronization information from the interface unit (3) to the wireless communications device (2) via a wired connection established between the interface unit (3) and the wireless communications device (2) by connection means (28, 38) of the wireless communications device (2) and an adaptor (24) arranged in the interface unit (3) in which the wireless communications device (2) can be placed when the personal communications system is not active in a call.

2. A method according to claim 1, **characterized in that** said personal communications system is a headset system comprising a handset or headset (2) and a base station (3).

3. A method according to claim 1 or 2, **characterized in that** said wireless communication protocol is a Digital Enhanced Cordless Telecommunications protocol.

4. A method according to claim 3, **characterized in that** the method further comprises the step of transmitting information regarding available channels in said Digital Enhanced Cordless Telecommunications protocol from the interface unit (3) to the wireless communications device (2) via said wired connection.

5. A method according to any one of claims 1 to 4, **characterized in that** the method comprises transmitting information from the interface unit (3) to the wireless communications device (2) via the wired connection by means of a serial interface (27, 37) in each of the interface unit (3) and the wireless communications device (2).

6. A personal communications system comprising a wireless communications device (2) and an interface unit (3), wherein each of said wireless communications device (2) and interface unit (3) comprises a transceiver (23, 33) configured to transmit radio signals between said wireless communications device (2) and said interface unit (3) according to a wireless communication protocol,
**characterized in that** the interface unit (3) has an adaptor (24) in which the wireless communications device (2) can be placed when the personal communications system is not active in a call, each of the adaptor (24) and the wireless communications device (2) comprising connection means (28, 38) configured to establish a wired connection for transmission of electrical signals between the interface unit (3) and the wireless communications device (2); and the interface unit (3) is configured to send synchronization information to the wireless communications device (2) via said wired connection.

7. A personal communications system according to claim 6, **characterized in that** said personal communications system is a headset system comprising a headset (2) and a base station (3).

8. A personal communications system according to claim 6 or 7, **characterized in that** said wireless communication protocol is a Digital Enhanced Cordless Telecommunications protocol.

9. A personal communications system according to claim 8, **characterized in that** the interface unit (3) is further configured to send information regarding available channels in said Digital Enhanced Cordless Telecommunications protocol to the wireless communications device (2) via said wired connection.

10. A personal communications system according to any one of claims 6 to 9, **characterized in that** each of the interface unit (3) and the wireless communications device (2) comprises a serial interface (27, 37) for transmitting information from the interface unit (3) to the wireless communications device (2) via the wired connection.
